# EUROPÄISCHE PATENTSCHRIFT

(11) **EP 0 965 734 B1**
(45) Veröffentlichungstag und Bekanntmachung des Hinweises auf die Patenterteilung: **20.10.2004**
(21) Anmeldenummer: 99111392.9
(22) Anmeldetag: 11.06.1999
(51) Int. Cl.: F01N 3/08, F02D 41/02, F02D 41/04

(54) **Regelstrategie für einen NOx-Speicher**
Control strategy for NOx-accumulator
Stratégie de commande pour accumulateur de NOx

(30) Priorität: 20.06.1998 DE 19827420
(43) Veröffentlichungstag der Anmeldung: 22.12.1999
(73) Patentinhaber: Dr.Ing. h.c.F. Porsche Aktiengesellschaft, 70435 Stuttgart (DE); DaimlerChrysler AG, 70567 Stuttgart (DE); Bayerische Motoren Werke Aktiengesellschaft, 80788 München (DE)
(72) Erfinder: Huynh, Ngoc-Hoa Dr., 71229 Leonberg (DE); Salzer, Lorenz K.F., 71277 Rutesheim (DE); Stetter, Ralph, 73630 Remshalden (DE)

(56) Entgegenhaltungen:
- EP-A- 0 735 250
- EP-A- 0 849 441
- DE-A- 19 517 168
- US-A- 5 564 393

## Beschreibung

Die Erfindung betrifft ein Verfahren zum Betreiben eines NOx-Speichers für eine Brennkraftmaschine.

Die EP 0 849 441 beschreibt eine Steuervorrichtung zum Betreiben eines NOx-Speichers für eine Brennkraftmaschine gemäß dem Oberbegriff des Anspruchs 1.

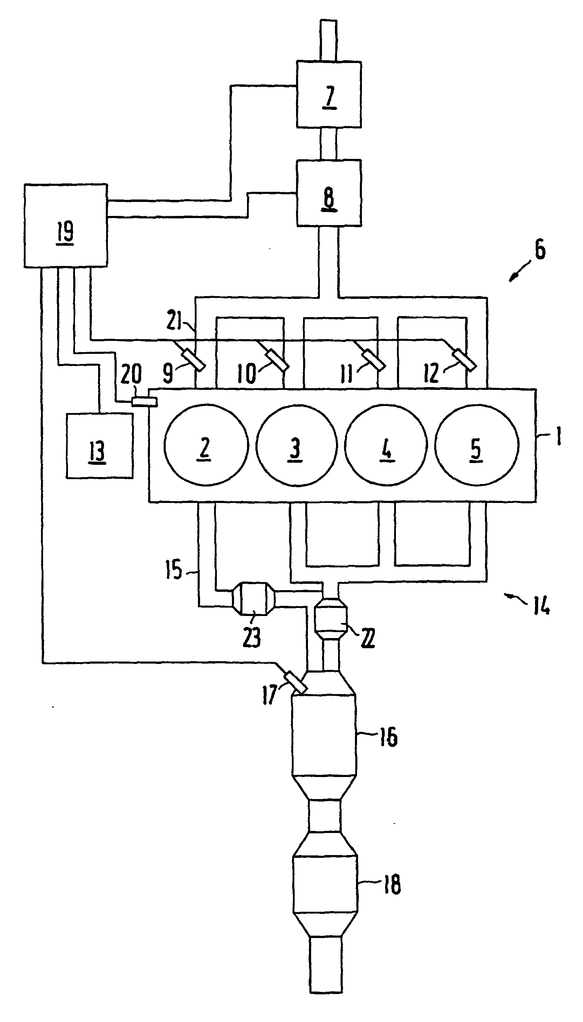

Demgegenüber ist es Aufgabe der Erfindung, ein Verfahren zum Betreiben eines NOx-Speichers für eine Brennkraftmaschine hinsichtlich der Zumessung des Regenerationsmittels zu verbessern.
Hierzu ist es vorgesehen, bei der Bestimmung der Anzahl der zur Regeneration notwendigen Arbeitsspiele, die einer Zumessung von Kraftstoff als Regenerationsmittel entspricht, weitere, eine. Verzugszeit zwischen der Zumessung des Regenerationsmittels und dessen Wirksamwerden im NOx-Speicher beeinflussende Parameter zu berücksichtigen. So wird berücksichtigt, daß der zur Regeneration zugeführte Kraftstoff zunächst gar nicht zur Regeneration zur Verfügung steht, sondern vielmehr beim Aufbau eines Kraftstoff-Wandfilmes in einem Ansaugkanal zur Brennkraftmaschine sowie zum Abbau des O₂-Vorrates, der in Katalysatoren stromauf des NOx-Speichers sowie ggf. im NOx-Speicher selbst gebunden ist, benötigt wird. Es wird daher vorgeschlagen, diese Parameter (Kraftstoff-Wandfilm, Menge des gebundenen O₂) bei der Bestimmung der Anzahl der zur Regeneration notwendigen Arbeitsspiele zu berücksichtigen. Alternativ ist es möglich, in Verwendung der erfindungsgemäßen Steuervorrichtung den Kraftstoff mittels einer direkter Kraftstoffeinspritzung in den Brennraum zuzuführen, und somit gar nicht erst einen Kraftstoff-Wandfilm aufzubauen. Alternativ oder ergänzend hierzu wird vorgeschlagen, bei der Verwendung der erfindungsgemäßen Steuervorrichtung einen stromauf des NOx-Speichers liegenden Katalysator zu benutzen, wobei der Katalysator hinsichtlich der in dem Katalysator speicherbaren O₂-Menge minimiert ist; im günstigsten Fall ist keine O₂-Speicherfähigkeit vorhanden.
Die Erfindung ist sowohl für Diesel-Brennkraftmaschinen wie auch für Otto-Brennkraftmaschinen anwendbar.
Die Erfindung ist nachstehend anhand des in der einzigen Figur dargestellten Ausführungsbeispieles näher erläutert.
Eine Brennkraftmaschine 1 mit vier Zylindern 2 bis 5 weist eine Ansauganlage 6 mit einem Luftmassengeber 7 und einem Drosselklappengeber 8 auf. Vor den einzelnen Zylindern 2 bis 5 sind Einspritzventile 9 bis 12 zur Kraftstoffzumessung angeordnet. An den Brennkraftmaschine 1 ist ferner ein Kurbelwellengeber 13 vorgesehen.

Abgasseitig weist die Brennkraftmaschine 1 eine Abgasanlage 14 auf, in der für den ersten Zylinder 2 eine separate Abgasführung 15 vorgesehen ist. Die separate Abgasführung 15 mündet zusammen mit dem weiteren Teil der Abgasanlage 14 in einen NOx-Speicher 16. Im Einlaufbereich des NOx-Speichers 16 ist eine Sonde 17 angeordnet, die den Sauerstoffüberschuß im Abgas bestimmt. Dem NOx-Speicher 16 ist schließlich ein Katalysator 18 nachgeschaltet.

Ein Steuergerät 19 erhält die Signale des Luftmassengebers 6, des Drosseklappengebers 7, des Kurbelwellengebers 13 und der Sonde 17. Das Steuergerät 19 steuert über die Einspitzdüsen 9 bis 12 zylinderindividuell die Kraftstoffzumessung zur Brennkraftmaschine 1.

Im Betrieb, d.h. bei betriebswarmer Brennkraftmaschine 1 und normaler Betriebsweise außerhalb der Maximalzustände wie z.B. Leerlauf oder Vollast, erfolgt die Kraftstoffzumessung über das Steuergerät 19 in der Weise, daß die Brennkraftmaschine 1 mit Luftüberschuß betrieben wird. Bei dieser ersten Betriebsart nimmt der NOx-Speicher 16 aus dem Abgas NOx auf.

Das Steuergerät 19 erfaßt zur Steuerung der Beladung des NOx-Speichers 16 die Anzahl der Arbeitsspiele, hier die Anzahl der Verbrennungszyklen, der Brennkraftmaschine 1. Bei einer Umdrehung der nicht gezeigten Kurbelwelle der Brennkraftmaschine 1 werden zwei Verbrennungszyklen abgeschlossen, also zwei Arbeitsspiele gezählt. Bei jedem achtundzwanzigsten Arbeitsspiel, wobei über alle Zylinder 2 bis 5 gezählt wird, erhöht das Steuergerät 19 die dem ersten Zylinder 2 zugeführte Kraftstoffmenge, so daß hier bei dem darauffolgenden Arbeitsspiel der erste Zylinder 2 mit Kraftstoffüberschuß arbeitet und unverbrannten Kraftstoff in die separate Abgasführung 15 einleitet. Dieses Abgasvolumen gelangt über die separate Abgasführung 15 unvermischt zum NOx-Speicher 16, der in Folge der Konzentrationsänderung der Abgasbestandteile nun das gespeicherte NOx abgibt. Das derart freigesetzte NOx gelangt nachfolgend zusammen mit dem unverbrannten Kraftstoff in den Katalysator 18 und wird hier reduziert.

Weiterhin erfaßt das Steuergerät 19 ein Signal eines Motortemperaturgebers 20, der an der Brennkraftmaschine 1 angeordnet ist. Mit Hilfe dieses Temperatursignales, sowie weiterer Betriebsparameter der Brennkraftmaschine 1 kann das Steuergerät 19 in an sich bekannter Weise die Bildung eines Kraftstoffilmes an einer Wandung der Ansauganlage 6 im Bereich stromab der Einspritzventile 9 bis 12 bestimmen. Im vorliegenden Fall ist dies vor allem für einen zum ersten Zylinder 2 führendes Ansaugrohr 21 von Belang, der über das erste Einspritzventil 9 der zuvor beschriebene Kraftstoffüberschuß eingebracht wird. Dieser zusätzlich eingebrachte Kraftstoff wird jedoch teilweise zum Aufbau des zuvor beschriebenen Kraftstoff-Wandfilmes verwendet. Deshalb steuert das Steuergerät 19 das Einspritzventil 9 in der Weise an, daß die zur Regeneration des NOx-Speichers 16 benötigte Kraftstoffmenge auch unter Berücksichtigung des für den Aufbau des Kraftstoff-Wandfilmes verwendeten Anteil stets in ausreichender Größe in die Abgasführung 15 gelangt. An die Stelle einer Veränderung der zugefühten Kraftstoffmenge kann auch alternativ oder ergänzend eine Veränderung der Anzahl der Arbeitsspiele bis zur nächsten Erhöhung der zugeführten Kraftstoffmenge treten. So entspricht eine Verminderung der Anzahl der Arbeitsspiele einer Erhöhung der zugeführten Kraftstoffmenge.

Die Abgasanlage 14 weist stromauf des NOx-Speichers 16 einen Startkatalysator 22 auf; für die separate Abgasführung 15 ist ein eigener Vorkatalysator 23 vorgesehen. Inbesondere der zweite Vorkatalysator 23 ist so ausgelegt, daß seine O₂-Speicherfähigkeit möglichst gering ist, da ansonsten im zweiten Vorkatalysator 23 gespeichertes O₂ zu einer zusätzlichen Reduzierung des durch die separate Abgasführung 15 geleiteten unverbrannten Kraftstoffes führen würde. Auch eine O₂-Speicherfähigkeit des NOx-Speichers 16 ist zu minimieren, wenn die Beschichtung des NOx-Speichers 16 zusätzlich zu den adsorbierenden Eigenschaften auch katalytische Eigenschaften aufweist. Da der unverbrannte Kraftstoff ausschließlich über die separate Abgasführung 15 zum NOx-Speicher 16 gelangt, ist die O₂-Speicherfähigkeft des ersten Vorkatalysators 22 im vorliegenden Beispiel ohne Belang.

Soweit die O₂-Speicherfähigkeit des zweiten Vorkatalysators 23 nicht im notwendigen Maße unterdrückt werden kann, kann es alternativ oder ergänzend hierzu vorgesehen sein, daß das Steuergerät 19 bei Zumessung der zusätzlichen Kraftstoffmenge durch das erste Einspritzventil 9 oder die Anzahl der Arbeitsspiele auch die Kraftstoffmenge berücksichtigt, die benötigt wird, um das im Vorkatalysator 23 gespeicherte O₂ abzubauen, um so eine ausreichende Menge an unverbranntem Kraftstoff zum NOx-Speicher 16 gelangen zu lassen.

## Patentansprüche

1. Steuervorrichtung zum Betreiben eines NOx-Speichers (16) für eine Brennkraftmaschine (1), wobei die Steuervorrichtung (19) die Zumessung eines Regenerationsmittels auf der Grundlage einzelner Arbeitsspiele der Brennkraftmaschine bestimmt, **dadurch gekennzeichnet, daß** bei der Zumessung des Regenerationsmittels zusätzlich weitere, die Verzugszeit zwischen der Zumessung des Regenerationsmittels und dessen Wirksamwerden im NOx-Speicher beeinflussende Parameter berücksichtigt sind.

2. Steuervorrichtung nach Anspruch 1, **dadurch gekennzeichnet, daß** als weiterer Parameter die Bildung eines Kraftstoff-Wandfilmes berücksichtigt ist.

3. Steuervorrichtung nach Anspruch 1 oder 2, **dadurch gekennzeichnet, daß** als weiterer Parameter die in einem stromauf des NOx-Speichers (16) liegenden Katalysator (23) gespeicherte O₂-Menge berücksichtigt ist.

4. Steuervorrichtung nach einem der Ansprüche 1 oder 2, **dadurch gekennzeichnet, daß** die Steuervorrichtung (19) die Zumessung des Regenerationsmittels auf der Grundlage einzelner Arbeitsspiele der Brennkraftmaschine (1) bestimmt und ein stromauf des NOx-Speichers (16) liegende Katalysator (23) verwendet ist, wobei der Katalysator (23) hinsichtlich der in dem Katalysator (23) speicherbaren O₂-Menge minimiert ist.

5. Steuervorrichtung nach einem der Ansprüche 1, 3 oder 4, **dadurch gekennzeichnet, daß** die Steuervorrichtung in Verbindung mit einer direkter Kraftstoffeinspritzung in einen Brennraum verwendet ist.

## Claims

1. A control device for operating a NOx accumulator (16) for an internal-combustion engine (1), wherein the control device (19) determines the metering of a regenerant on the basis of individual working cycles of the internal-combustion engine, **characterised in that**, in metering the regenerant, further parameters affecting the delay time between when the regenerant is metered and when it takes effect in the NOx accumulator are additionally taken into consideration.

2. A control device according to claim 1, **characterised in that** the formation of a fuel wall-film is taken into consideration as a further parameter.

3. A control device according to claim 1 or 2, **characterised in that** the amount of O₂ stored in a catalytic converter (23) arranged upstream of the NOx accumulator (16) is taken into consideration as a further parameter.

4. A control device according to either one of claims 1 and 2, **characterised in that** the control device (19) determines the metering of the regenerant on the basis of individual working cycles of the internal-combustion engine (1), and a catalytic converter (23) arranged upstream of the NOx accumulator (16) is used, the catalytic converter (23) being minimised with respect to the amount of O₂ storable therein.

5. A control device according to any one of claims 1, 3 and 4, **characterised in that** the control device is used in conjunction with direct fuel injection into a combustion chamber.

## Revendications

1. Dispositif de commande pour faire fonctionner un accumulateur de NOx (16) pour un moteur à combustion interne (1), le dispositif de commande (19) déterminant l'ajout mesuré d'un produit de régénération sur la base de cycles de fonctionnement individuels du moteur à combustion interne, **caractérisé en ce qu'**on tient compte, lors de l'ajout du produit de régénération, d'autres paramètres supplémentaires influençant le temps de retard entre l'ajout mesuré du produit de régénération et son entrée en activité dans l'accumulateur de NOx.

2. Dispositif de commande selon la revendication 1, **caractérisé en ce qu'**on tient compte entre autres paramètres de la formation d'une pellicule de carburant sur la paroi.

3. Dispositif de commande selon la revendication 1 ou 2, **caractérisé en ce qu'**on tient compte comme autre paramètre de la quantité de O₂ accumulée dans un catalyseur (23) situé en amont de l'accumulateur de NOx (16).

4. Dispositif de commande selon l'une des revendications 1 ou 2, **caractérisé en ce que** le dispositif de commande (19) détermine l'ajout mesuré du produit de régénération sur la base de cycles de travail individuels du moteur à combustion interne (1), et **en ce qu'**on utilise un catalyseur (23) situé en amont de l'accumulateur de NOx (16), le catalyseur (23) étant minimisé en ce qui concerne la quantité de O₂ pouvant être accumulée dans le catalyseur (23).

5. Dispositif de commande selon l'une des revendications 1, 3 ou 4, **caractérisé en ce que** le dispositif de commande est utilisé en combinaison avec une injection directe de carburant dans une chambre de combustion.
